# EUROPÄISCHE PATENTSCHRIFT

(11) **EP 2 305 021 B1**
(45) Veröffentlichungstag und Bekanntmachung des Hinweises auf die Patenterteilung: **07.01.2015**
(21) Anmeldenummer: 10008451.6
(22) Anmeldetag: 13.08.2010
(51) Int. Cl.: A01D 69/02, A01D 78/10

(54) **Heuwerbungsmaschine**
Hay rake
Faneuse

(30) Priorität: 30.09.2009 DE 102009043591
(43) Veröffentlichungstag der Anmeldung: 06.04.2011
(73) Patentinhaber: CLAAS Saulgau GmbH, 88348 Bad Saulgau (DE)
(72) Erfinder: Loebe, Stefan, 88348 Bad Saulgau (DE)

(56) Entgegenhaltungen:
- EP-A1- 1 488 679
- EP-A2- 2 047 738
- WO-A1-2007/118924

## Beschreibung

Die Erfindung betrifft eine Heuwerbungsmaschine gemäß dem Oberbegriff des unabhängigen Anspruchs 1.

### Stand der Technik

Bekannt sind Heuwerbungsmaschinen unter dem Begriff Kreiselschwader und Kreiselwender, die in der Landwirtschaft für die Bergung der Grünfütterernte eingesetzt werden. Diese werden an Zugfahrzeuge als auswechselbare Einrichtungen angekoppelt und von der Zapfwelle des Zugfahrzeugs angetrieben. Bei mehrkreiseligen Heuwerbungsmaschinen wird die Antriebsenergie über verzweigte Antriebsstränge an die jeweiligen Rechkreisel herangeführt. Dazu sind Gelenkwellen und Verzweigungsgetriebe erforderlich. Die EP 1 433 372 A1 beschreibt ein derartiges aufwendiges verzweigtes Antriebssystem, beispielsweise für einen Sechskreiselschwader, welches zudem durch die zahlreichen Gelenkwellen und Getriebe einen erheblichen Anteil an dem Gewicht einer derartigen Heuwerbungsmaschine hat.

Die EP 2 047 738 A2 beschreibt eine elektrische Antriebsvorrichtung für Pflückwalzen, von Vorsatzgeräten zum Ernten von Fruchtständen stängelartigen Ernteguts, im Sinne des Oberbegriffs des Anspruchs 1.

### Aufgabenstellung

Hier setzt die Aufgabe der Erfindung an mit dem Ziel, ein kostengünstiges und gewichtsersparendes flexibles und variables Antriebssystem für Heuwerbungsmaschinen vorzuschlagen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung beschreibt eine Heuwerbungsmaschine mit um eine Hochachse angetriebenen Rechkreiseln, die ein frequenzvariables elektrisches Antriebssystem zum Antrieb von Elektromotoren für die Rechkreisel umfasst, wobei das Antriebssystem Frequenzumrichter umfasst und jeden Rechkreisel ein separater Frequenzumrichter zugeordnet ist.

Das elektrische Antriebssystem kann dabei entweder an einen externen Generator des Zugfahrzeugs ankuppelbar sein oder die Heuwerbungsmaschine verfügt über einen Bordgenerator, der das elektrische Antriebssystem mit elektrischer Energie versorgt.

Der Bordgenerator kann dann entweder von der Zapfwelle des Zugfahrzeugs oder beispielsweise auch von der hydraulischen Energieversorgung des Zugfahrzeugs und dann von einem Hydraulikmotor angetrieben werden. Der Bordgenerator ist als Drehstromgenerator ausgeführt und beispielsweise so bemessen, dass die Ausgangsspannung des Drehstromgenerators variiert werden kann, beispielsweise im Spannungsbereich der Ausgangsspannung von etwa 300Volt bis 800Volt. In besonders vorteilhafter Weise kann auch die Ausgangsfrequenz des Bordgenerators variiert werden, welches durch den einen hydraulischen Abtrieb besonders vorteilhaft durch Variation der Antriebsdrehzahl des Hydraulikmotors, beispielsweise durch ein vorgeschaltetes Proportional-Wege-oder Proportional-Stromregelventil, erzeugt werden kann. Die variable Ausgangsfrequenz des Bordgenerators liegt beispielsweise etwa im Bereich zwischen 50 Hz und 200 Hz.

Die Frequenzumrichter können entweder der externen Spannungsversorgung oder auch dem Bordgenerator nachgeschaltet sein.

Der Antriebsmotor der Rechkreisel ist jeweils als Drehstrommotor ausgelegt. In einer weiteren vorteilhaften Ausgestaltung kann dieser auch als Servomotor ausgelegt sein, so dass die Drehwinkellagen der Rechkreisel, beispielsweise in Verbindung mit Kreiselwendern, bei denen sich die Flugkreise der benachbarten Rechkreisel teilweise überdecken, gesteuert und geregelt werden können, so dass die Zinkenarme der benachbarten Rechkreisel nicht miteinander kollidieren. Der Betrieb kann dabei momentan geschwindigkeits- oder positionsgeregelt sein. Kombinationen sind durch die Schachtelung der Regelkreise möglich. Besonders vorteilhaft können dabei Drehstrom-Synchronmaschinen oder Drehstrom-Asynchronmaschinen als DrehstromServomotore in Verbindung mit einem Frequenzumrichter in Verbindung mit einer Vektorregelung zum Antrieb eines Rechkreisels eingesetzt werden. Dies ermöglicht eine besonders effektive Anpassung an verschiedene Betriebssituationen im laufenden Betrieb.

Weitere Vorteile, die sich aus der Erfindung in besonders vorteilhafter Weise realisieren lassen, sind beispielsweise
- Einzelkreiselabschaltung,
- sequenzieller Anlauf,
- Erkennung des Auslastungsgrads des Antriebs
- Regelung Vorfahrtgeschwindigkeit in Abhängigkeit vom Kreiselantriebsdrehmoment
- Vorgewende-Drehzahlreduzierung, Sanftanlauf
- Regelung Kreiseldrehzahl in Abhängigkeit mit der Vorfahrtgeschwindigkeit
- Regelung der Kreiseldrehzahl in Abhängigkeit der Schwadform, beispielsweise in Verbindung mit einer Bildauswertung

Weitere bedeutsame Vorteile der Erfindung, die sich somit ergeben und leicht realisierbar sind:
- Einzelantrieb der Kreisel mit je einem E - Motor, der einfach zu- und abschaltbar ist
- Vereinfachung der Antriebstechnik insgesamt durch weniger Bauteile
- keine Gelenkwellen
- Mehrfachteleskope durch einfache Klapptechnik ohne Gelenkwellen möglich
- keine Getriebewartung
- keine Gelenkwellenwartung
- integrierte Überlastsicherung an jedem Kreisel separat möglich

### Ausführungsbeispiel

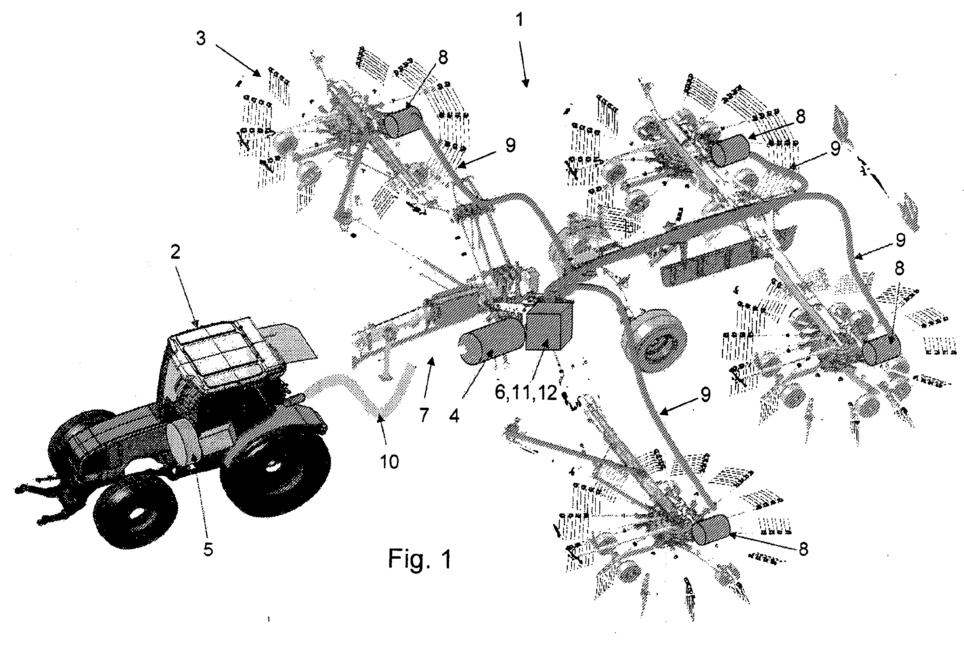

Fig.1 zeigt ein Ausführungsbeispiel der Erfindung anhand einer Heuwerbungsmaschine 1 und zwar an einem Kreiselschwader mit vier Rechkreiseln 3. Es handelt sich hierbei um eine Prinzipdarstellung. Der Kreiselschwader 1 ist vorgesehen zum Anhängen an ein Zugfahrzeug 2. Weist das Zugfahrzeug 2 einen aus der Sicht des Kreiselschwaders 1 externen Generator 5 als elektrische Energieversorgungseinheit auf, so kann der Kreiselschwader über eine elektrische Anschlussleitung 10 an diese angedockt werden. In diesem Fall kann der Bordgenerator 4 des Kreiselschwaders 1 entfallen.

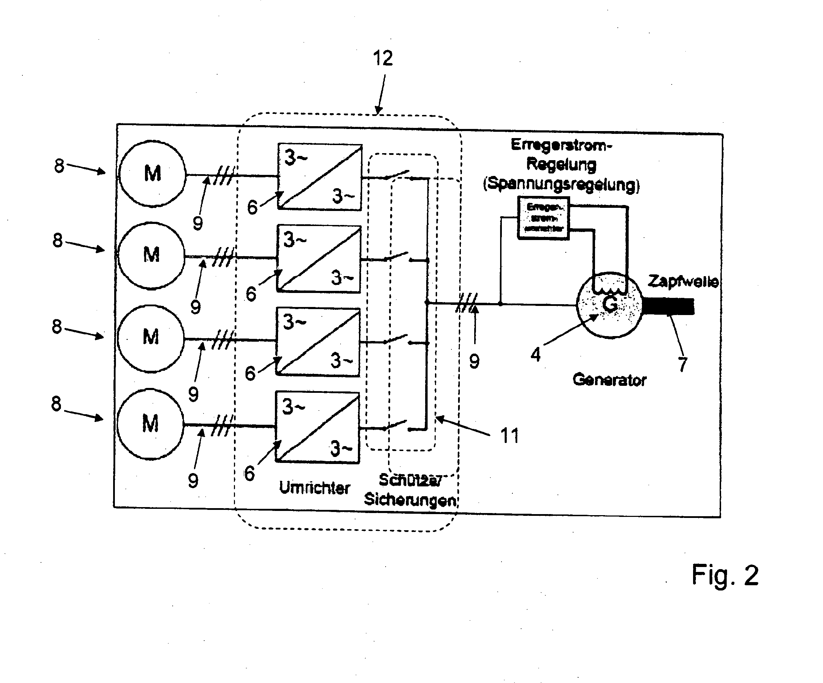

Ist diese Voraussetzung nicht gegeben, so weist der Kreiselschwader 1 einen Bordgenerator 4 als Drehstromgenerator auf, der wie in Fig.2 erläutert, eine Erregerstromregelung oder eine Spannungsregelung aufweist. Dabei wird der Bordgenerator 4 von der Zapfwelle 7 des Zugfahrzeugs 2 angetrieben. Dem Bordgenerator 4 ist eine Steuereinheit 12, bestehend aus mehreren Frequenzumrichtern 6 mit entsprechender Schützensteuerung 11 nachgeschaltet, so dass die Einzelantriebe 8 der Rechkreisel 3, ausgeführt als Drehstrommotoren, die auch als Drehstromservomotoren ausgebildet sein können, über die elektrischen Leitungsverbindungen 9 einzeln angesteuert werden können. Über die Frequenzumrichter 6 kann die Drehzahl eines Rechkreisels 3 variiert werden. Jedem Rechkreisel 3 ist ein separater Frequenzumrichter 6 zugeordnet, so kann jeder Rechkreisel 3 individuell angesteuert und überwacht werden und zwar sowohl was seine Drehzahl, als auch seine Leistungsaufnahme anbetrifft. Ebenso kann jeder Rechkreisel 3 separat zu- oder abgeschaltet werden, oder in der Anlaufphase zeitlich verzögert, d.h. sequentiell zugeschaltet werden. Im Vorgewende kann beispielsweise beim Ausheben der Rechkreisel 3 die Drehzahl aller Kreisel automatisch abgesenkt und beim wieder Absenken automatisch erhöht werden. Auch kann die momentane Leistungsaufnahme eines jeden Rechkreisels überwacht werden und ggf. können daraus Rückschlüsse steuerungstechnischer Art gezogen werden, wie beispielsweise automatische Abschaltung bzw. Freilaufschaltung des Rechkreisels 3 und dessen Antriebsmotor bei Überlast, z.B. bei Kollisionen mit festen Hindernissen.

Die Darstellung der Fig. 1 und Fig. 2 ist als exemplarisches Beispiel zu verstehen und bezieht sich auf Heuwerbungsmaschinen im Allgemeinen, d.h. sowohl auf Kreiselschwader als auch auf Kreiselwender.

### Bezugszeichenliste

- 1: Heuwerbungsmaschine, (Kreiselschwader, Kreiselwender)
- 2: Zugfahrzeug
- 3: Rechkreisel
- 4: Bordgenerator
- 5: externer Generator
- 6: Frequenzumrichter
- 7: Zapfwelle
- 8: Einzelantriebe (Drehstrommotor, Servomotor)
- 9: elektrische Leitungsverbindungen
- 10: elektrische Zuleitung
- 11: Schützensteuerung
- 12: komplette Steuerung

## Patentansprüche

1. Heuwerbungsmaschine mit, um eine Hochachse von elektrischen Antriebsmotoren angetriebenen Rechkreiseln, wobei die Heuwerbungsmaschine (1) ein frequenzvariables elektrisches Antriebssystem zum Antrieb der Rechkreisel (3) aufweist, **dadurch gekennzeichnet, dass** das Antriebssystem Frequenzumrichter umfasst, wobei jedem Rechkreisel ein separater Frequenzumrichter zugeordnet ist.

2. Heuwerbungsmaschine nach Anspruch 1, **dadurch gekennzeichnet, dass** das elektrische Antriebssystem an einen externen Generator (5) eines Zugfahrzeugs (2) ankuppelbar ist.

3. Heuwerbungsmaschine nach Anspruch 1, **dadurch gekennzeichnet, dass** das elektrische Antriebssystem der Heuwerbungsmaschine (1) einen Bordgenerator (4) umfasst.

4. Heuwerbungsmaschine nach Anspruch 3, **dadurch gekennzeichnet, dass** der Bordgenerator (4) von der Zapfwelle (7) eines Zugfahrzeugs (1) angetrieben wird.

5. Heuwerbungsmaschine nach Anspruch 3, **dadurch gekennzeichnet, dass** der Bordgenerator (4) von der hydraulischen Energieversorgung eines Zugfahrzeugs (1) angetrieben wird.

6. Heuwerbungsmaschine nach Anspruch 3, **dadurch gekennzeichnet, dass** der Bordgenerator (4) ein Drehstromgenerator ist.

7. Heuwerbungsmaschine nach Anspruch 1, **dadurch gekennzeichnet, dass** die Antriebsmotoren der Rechkreisel Synchron- oder Asynchron-Drehstrommotoren sind.

8. Heuwerbungsmaschine nach Anspruch 1, **dadurch gekennzeichnet, dass** die Antriebsmotoren der Rechkreisel Drehstrom-Servomotoren sind.

9. Heuwerbungsmaschine nach Anspruch 1, **dadurch gekennzeichnet, dass** die Heuwerbungsmaschine (1) eine komplette Steuerung (12) zur Steuerung des Antriebs der Rechkreisel (3) umfasst.

10. Heuwerbungsmaschine nach Anspruch9, **dadurch gekennzeichnet, dass** die Steuerung (12) eine Einzelkreiselabschaltung für einen oder mehrere der Rechkreisel (3) aufweist.

11. Heuwerbungsmaschine nach Anspruch 9, **dadurch gekennzeichnet, dass** die Steuerung (12) einen sequenziellen Anlauf für einzelne oder mehrere Rechkreisel (3) aufweist.

12. Heuwerbungsmaschine nach einem oder mehreren der Ansprüche 1 bis 11, **dadurch gekennzeichnet, dass** sie ein Kreiselschwader ist.

## Claims

1. A haymaking machine comprising rotary rakes driven about a vertical axis by electric drive motors, wherein the haymaking machine (1) has a variable-frequency electric drive system for driving the rotary rakes (3), **characterised in that** the drive system includes frequency converters, wherein a separate frequency converter is associated with each rotary rake.

2. A haymaking machine according to claim 1 **characterised in that** the electric drive system can be coupled to an external generator (5) of a towing vehicle (2).

3. A haymaking machine according to claim 1 **characterised in that** the electric drive system of the haymaking machine (1) includes an on-board generator (4).

4. A haymaking machine according to claim 3 **characterised in that** the on-board generator (4) is driven by the power take-off shaft (7) of a towing vehicle (1).

5. A haymaking machine according to claim 3 **characterised in that** the on-board generator (4) is driven by the hydraulic power supply of a towing vehicle (1).

6. A haymaking machine according to claim 3 **characterised in that** the on-board generator (4) is a three-phase generator.

7. A haymaking machine according to claim 1 **characterised in that** the drive motors of the rotary rakes are synchronous or asynchronous three-phase motors.

8. A haymaking machine according to claim 1 **characterised in that** the drive motors of the rotary rakes are three-phase servomotors.

9. A haymaking machine according to claim 1 **characterised in that** the haymaking machine (1) includes a complete control (12) for controlling the drive of the rotary rakes (3).

10. A haymaking machine according to claim 9 **characterised in that** the control (12) has an individual circuit shut-down means for one or more of the rotary rakes (3).

11. A haymaking machine according to claim 9 **characterised in that** the control (12) has a sequential start-up for individual ones or a plurality of rotary rakes (3).

12. A haymaking machine according to one or more of claims 1 to 11 **characterised in that** it is a rotary windrower.

## Revendications

1. Machine de fenaison comportant des rotors de râtelage entraînés autour d'un axe vertical par des moteurs d'entraînement électriques, ladite machine de fenaison (1) présentant un système d'entraînement électrique à variation de fréquence pour entraîner les rotors de râtelage (3), **caractérisée en ce que** le système d'entraînement électrique comprend des variateurs de fréquence, un variateur de fréquence séparé étant associé à chaque rotor de râtelage.

2. Machine de fenaison selon la revendication 1, **caractérisée en ce que** le système d'entraînement électrique peut être accouplé à un générateur externe (5) d'un véhicule tracteur (2).

3. Machine de fenaison selon la revendication 1, **caractérisée en ce que** le système d'entraînement électrique de la machine de fenaison (1) comprend un générateur embarqué (4).

4. Machine de fenaison selon la revendication 3, **caractérisée en ce que** le générateur embarqué (4) est entraîné par l'arbre de prise de force (7) d'un véhicule tracteur (1).

5. Machine de fenaison selon la revendication 3, **caractérisée en ce que** le générateur embarqué (4) est entraîné par l'alimentation en énergie hydraulique d'un véhicule tracteur (1).

6. Machine de fenaison selon la revendication 3, **caractérisée en ce que** le générateur embarqué (4) est un alternateur triphasé.

7. Machine de fenaison selon la revendication 1, **caractérisée en ce que** les moteurs d'entraînement des rotors de râtelage sont des moteurs triphasés synchrones ou asynchrones.

8. Machine de fenaison selon la revendication 1, **caractérisée en ce que** les moteurs d'entraînement des rotors de râtelage sont des servomoteurs triphasés.

9. Machine de fenaison selon la revendication 1, **caractérisée en ce que** la machine de fenaison (1) comprend une commande complète (12) pour commander l'entraînement des rotors de râtelage (3).

10. Machine de fenaison selon la revendication 9, **caractérisée en ce que** la commande (12) comprend un débrayage de rotor individuel pour un ou plusieurs des rotors de râtelage (3).

11. Machine de fenaison selon la revendication 9, **caractérisée en ce que** la commande (12) comprend un démarrage séquentiel pour un ou plusieurs rotors de râtelage (3).

12. Machine de fenaison selon l'une ou plusieurs des revendications précédentes 1 à 11, **caractérisée en ce qu'**il s'agit d'une andaineuse rotative.
